# EUROPÄISCHE PATENTANMELDUNG

(11) **EP 1 762 786 A1**
(43) Veröffentlichungstag der Anmeldung: **14.03.2007**
(21) Anmeldenummer: 05019897.7
(22) Anmeldetag: 13.09.2005
(51) Int. Cl.: F23M 13/00, G10K 11/175

(54) **Verfahren und Vorrichtung zur Dämpfung thermo-akustischer Schwingungen, insbesondere in einer Gasturbine**

(71) Anmelder: SIEMENS AKTIENGESELLSCHAFT, 80333 München (DE)
(72) Erfinder: Bethke, Sven, Dr., 40489 >Düsseldorf (DE)

(57) **Zusammenfassung**

Die Erfindung betrifft ein Verfahren zur Dämpfung thermo-akustischer Schwingungen (60) mittels eines Resonators (70), der ein Resonatorvolumen (42)aufweist, wobei in einem zu thermo-akustischen Schwingungen neigenden Hohlraum (46) thermo-akustische Schwingungen (60) induziert werden, und zumindest ein Teil der thermo-akustischen Schwingungen (60) aus dem Hohlraum (46) ausgekoppelt und in das Resonatorvolumen (42) eingekoppelt werden, wobei in dem Resonatorvolumen (42) Dämpfungsschwingungen (62) erzeugt werden, die auf die thermo-akustischen Schwingungen abgestimmt werden, wobei zumindest ein Teil der Dämpfungsschwingungen (62) in den Hohlraum (46) derart eingekoppelt wird, dass sich die Dämpfungsschwingungen und die thermo-akustischen Schwingungen in einem Überlappungsbereich (64) überlappen, und wobei sich die Schwingungen zumindest im Überlappungsbereich (64) weitgehend auslöschen. Die Erfindung betrifft eine Vorrichtung zur Dämpfung thermo-akustischer Schwingungen (60) in einem schwingungsfähigen Hohlraum (46), umfassend einen Resonator (70) mit einem Resonatorvolumen (42) und einen Hohlraum (46), so dass der Hohlraum (46) über eine Auskoppelleitung (72) mit dem Resonatorvolumen (42) verbunden ist, bei der die Auskoppelleitung (72) eine Einstelleinrichtung (76) aufweist, mittels derer eine thermo-akustische Schwingung in der Auskoppelleitung (72) beeinflussbar ist, und bei der eins weiteres Resonatorrohr vom zum Hohlraum (46) angeschlossen ist. Die Erfindung betrifft weiterhin eine Brennkammer (4) mit einem Verfahren und einer Vorrichtung (65) gemäß der Erfindung und eine Gasturbine (1) mit einer solchen Brennkammer (4).

## Beschreibung

Die Erfindung betrifft ein Verfahren zur Dämpfung thermo-akustischer Schwingungen mittels eines Resonators der ein Resonatorvolumen aufweist, und eine Vorrichtung zur Dämpfung thermo-akustischer Schwingungen in einem schwingungsfähigen Hohlraum, umfassend einen Resonator mit einem Resonatorvolumen und einem Hohlraum.

Das Verfahren als auch die Vorrichtung sollen in einer Brennkammer für Gasturbinen einsetzbar sein.

Eine Gasturbinenanlage umfasst z.B. einen Verdichter, eine Brennkammer und eine Turbine. Im Verdichter erfolgt ein Verdichten von angesaugter Luft, welcher anschließend ein Brennstoff beigemischt wird. In der Brennkammer wird das Gemisch verbrannt, wobei die Verbrennungsabgase der Turbine zugeführt werden. Von der Turbine wird den Verbrennungsabgasen thermische Energie entzogen und in mechanische Energie umgesetzt.

Bei der Verbrennung des Gemisches entstehen in der Brennkammer thermo-akustische Schwingungen, die sich in einer Welle fortpflanzen. In der Brennkammer kann sich eine stehende Welle mit einer Resonanzfrequenz ausbilden, welche die Brennkammer irreversible schädigt. Diese thermo-akustischen Probleme stellen ein Problem bei dem Entwurf und bei dem Betrieb von neuen Brennkammern, Brennkammerteilen und Brennern für derartige Gasturbinen dar.

Zum Verringern von thermo-akustischen Schwingungen werden deshalb im Stand der Technik z.B. Helmholtz-Resonatoren zur Dämpfung der Schwingungen eingesetzt. Ein Helmholtz-Resonator umfasst in der Regel ein Volumen mit darin befindlicher Luft oder einem anderen Gas. An das Volumen schließt sich ein Rohr, das sog. Resonatorrohr an, in dem sich ebenfalls Luft bzw. Gas befindet und das in die Brennkammer mündet. Die Luft bzw. das Gas im Volumen und im Resonatorrohr bilden ein Feder-Masse-System, wobei die Luft bzw. das Gas im Volumen die Feder und die Luft bzw. das Gas im Resonatorrohr die Masse bildet. Wenn das Feder-Masse-System mit einer Resonanzfrequenz schwingt, die durch das Volumen, die Querschnittsfläche des Resonatorrohres und die Länge des Resonatorrohres bestimmt ist, verhält sich der Helmholtz-Resonator wie eine Öffnung mit unendlicher Länge, die verhindert dass sich eine stehende Welle mit der Resonanzfrequenz ausbilden kann.

Ein Helmholz-Resonator weist jedoch eine feste Resonanzfrequenz auf. Das Entstehen von thermo-akustischen Schwingungen, kann so jedoch nur für Frequenzen, die der Resonanzfrequenz des Helmholtz-Resonators entsprechen oder in deren Nähe liegen, wirksam unterdrückt werden. Für Frequenzen die davon abweichen, ist die Wirkung des Helmholtz-Resonators deutlich reduziert.

Aufgabe der Erfindung ist es, ein verbessertes Verfahren und eine verbesserte Vorrichtung zur Dämpfung thermo-akustischer Schwingungen anzugeben, die eine effiziente Wirkung aufweist und flexibel gegenüber Änderungen der zu dämpfenden thermo-akustischen Schwingungen ist. Das Verfahren und die Vorrichtung sollen zur Anwendung in einer Brennkammer für Gasturbinen anwendbar sein.

Die auf das Verfahren gerichtete Aufgabe wird erfindungsgemäß gelöst durch ein Verfahren zur Dämpfung thermo-akustischer Schwingungen mittels eines Resonators, der ein Resonatorvolumen aufweist, wobei in einem zu thermo-akustischen Schwingungen neigenden Hohlraum thermo-akustische Schwingungen induziert und zumindest ein Teil der thermo-akustischen Schwingungen aus dem Hohlraum ausgekoppelt und in das Resonatorvolumen eingekoppelt werden, so dass in dem Resonatorvolumen Dämpfungsschwingungen erzeugt werden, die auf die thermo-akustischen Schwingungen abgestimmt werden, wobei zumindest ein Teil der Dämpfungsschwingungen in den Hohlraum derart eingekoppelt wird, dass sich die Dämpfungsschwingungen und die thermo-akustischen Schwingungen in einem Überlappungsbereich überlappen, und wobei sich die Schwingungen zumindest im Überlappungsbereich weitgehend auslöschen.

Die Erfindung geht von dem Wissen aus, dass sich eine Abweichung der tatsächlichen Frequenz der thermo-akustischen Schwingungen in einem schwingungsfähigem Hohlraum von der vorab berechneten Resonanzfrequenz des Resonators durch einen deutlichen Wirkungsverlust bei der Dämpfung auszeichnet. Diese Abweichungen können beispielsweise durch mechanische Veränderungen bei dem Hohlraum, zum Beispiel einer Brennkammer oder sonstige thermische Störungen oder anderweitige Störungen hervorgerufen werden. Dadurch wird auch die akustische Dämpfung verringert, so dass die thermo-akustische Schwingungen zunehmen. Dabei kann es zu einer sich aufschaukelnden Wechselwirkung zwischen thermischen und akustischen Störungen kommen, die hohe Belastungen des Hohlraums, beispielsweise einer Brennkammer verursachen. Die eingesetzten Resonatoren sind bisher auf eine feste und vorbestimmte Resonanzfrequenz ausgelegt und können daher bei Änderungen der akustischen Eigenschaften des schwingungsfähigen Hohlraums nicht mehr die gewünschte Dämpfungswirkung erzielen.

Ausgehend von dieser Erkenntnis wird nunmehr erstmals mit dem erfindungsgemäßen Verfahren zur Dämpfung thermo-akustischer Schwingungen in einem Hohlraum unerwünschte Effizienzminderung bei der Dämpfung verhindert. Dies erfolgt durch die Angleichung der Resonanzfrequenz des Resonators an die augenblicklich vorherrschende Frequenz der thermo-akustischen Schwingungen in dem Hohlraum.

Das grundlegende Prinzip der Erfindung besteht darin, dass einerseits eine gezielte Anregung des Resonators erfolgt und dass andererseits diese Anregung mit Hilfe der thermo-akustischen Schwingungen selber stattfinden. Der Resonator verhält sich in diesem Fall wieder wie ein idealer Resonator. Dies erfolgt dadurch, dass ein Teil der thermo-akustischen Schwingungen derart in den Resonator eingekoppelt wird, dass er eine Anregung der Dämpfungsschwingungen in dem Resonator erzeugt, und zwar dergestalt, dass bei der Rückführung der erzeugten Dämpfungsschwingungen in den Hohlraum zumindest im Überlappungsbereich der thermo-akustischen Schwingungen und Dämpfungsschwingungen diese weitgehend ausgelöscht werden. Ein Teil der thermo-akustischen Schwingungen des Hohlraums werden selbst zum Anregen des Resonatorvolumens verwendet. Dadurch ergibt sich bei Änderung der Frequenz der thermo-akustischen Schwingungen somit auch eine Änderung der Frequenz der Auskopplung und der Einkopplung der Schwingungen in den Resonator, womit sich auch die erzeugten Dämpfungsschwingungen des Resonators ändern. Des Weiteren bewirkt die vorweg stattfindende Auskopplung der thermo-akustischen Schwingungen, dass der Resonator zudem zeitverzögert zu den thermo-akustischen Schwingungen angeregt wird. Diese Zeitverzögerung wird dergestalt eingestellt, dass sich die erzeugten Dämpfungsschwingungen im Überlappungsbereich mit den thermo-akustischen Schwingungen auslöschen (destruktive Interferenz). Der Zeitverzug ergibt sich aus der Laufzeit des ausgekoppelten Teils der thermo-akustischen Schwingungen von dem Hohlraum zum Resonator.

Dieses Verfahren erlaubt somit eine nachträgliche Abstimmung des Resonators auf die jeweils vorherrschenden thermo-akustischen Schwingungen im Hohlraum. Durch diesen Abgleich der Dämpfungsschwingungen an die akustischen Schwingungen und die lokale Auslöschung wird verhindert, dass sich im Hohlraum eine stehende Welle mit der Resonanzfrequenz ausbilden kann, auch wenn die Frequenz der thermo- akustischen Schwingungen von den voraus berechneten Frequenzen der benötigten Resonanzschwingungen des Resonators durch äußere Einflüsse abweicht. Dadurch ist keine Resonanzkatastrophe im Hohlraum mehr möglich, die den Hohlraum bzw. die den Hohlraum begrenzenden Wände schädigen können.

Die Nutzung der Hohlraumschwingungen zum Anregen des Resonatorvolumens stellt zudem eine komfortable und einfache Lösung der Resonatoranregung dar. Zusätzlich Erreger für den Resonator sind nicht erforderlich.

In bevorzugter Ausgestaltung werden die Dämpfungsschwingungen bezüglich der thermo-akustischen Schwingungen gegenphasig abgestimmt. Damit ergibt sich eine Dämpfung der thermo-akustischen Schwingungen.

Bevorzugt werden die Dämpfungsschwingungen bezüglich ihrer Phase, ihrer Wellenlänge und ihrer Frequenz eingestellt. Damit ergibt sich im Überlappungsbereich eine vollständige Auslöschung der beiden Schwingungen.

In bevorzugter Ausgestaltung wird die Phase der Dämpfungsschwingungen im Überlappungsbereich über eine Beeinflussung der Laufzeit der aus dem Hohlraum ausgekoppelten thermo-akustischen Schwingungen eingestellt. Dies ermöglicht eine einfache nachträgliche Abstimmung des Resonators auf die thermo-akustischen Schwingungen. Eine einfache Einstellbarkeit ist insbesondere Vorteilhaft beispielsweise bei Hohlräumen, die stark unterschiedlichen Betriebstemperaturen ausgesetzt sind, da sich dabei die Eigenfrequenzen des Hohlraums, durch die veränderten thermo-akustischen Eigenschaften des Hohlraums verschieben.

Bevorzugt werden zur Erreichung einer zeitlich kontinuierlichen Auslöschung im Überlappungsbereich die Dämpfungsschwingungen in situ den thermo-akustischen Schwingungen angepasst. Damit ist eine weitgehende Auslöschung der beiden Schwingungen bei stark schwankenden äußeren Einflüssen schnell sichergestellt. Die in situ Anpassung kann durch einen Regelkreis erfolgen, der die den Zeitverzug und damit die Phase stets auf weitgehend vollständige Auslöschung nachregelt.

In bevorzugter Ausgestaltung werden die Dämpfungsschwingungen über einen Frequenzbereich zwischen 10Hz und 400 Hz eingestellt. Dieser große Bereich der Einstellbarkeit der Frequenz ermöglicht eine Vielzahl an Einsatzmöglichkeiten und Variationsmöglichkeiten des Hohlraums. Dieser Frequenzbereich ist besonders interessant bei als Brennkammern ausgestalteten Hohlräumen, in dem sich thermo-akustische Schwingungen aufgrund von Verbrennungsinstabilitäten bilden und ausbreiten können.

Bevorzugt werden die thermo-akustischen Schwingungen in dem Hohlraum durch Verbrennungsschwingungen induziert. Bei der Verbrennung eines geeigneten Brennstoff/Gas-Gemisches im Hohlraum entstehen beispielsweise Heißgase die anschließend zur Energieerzeugung verwendet werden.

Die auf die Vorrichtung gerichtete Aufgabe wird erfindungsgemäß gelöst durch eine Vorrichtung zur Dämpfung thermo-akustischer Schwingungen in einem schwingungsfähigen Hohlraum, umfassend einen Resonator mit einem Resonatorvolumen und einen Hohlraum, wobei der Hohlraum über eine Auskoppelleitung mit dem Resonatorvolumen verbunden ist, bei der die Auskoppelleitung eine Einstelleinrichtung aufweist, mittels derer eine thermo-akustische Schwingung in der Auskoppelleitung beeinflussbar ist, und bei der ein weiteres Resonatorrohr vom Resonator zum Hohlraum angeschlossen ist.

Das grundlegende Prinzip dieser Vorrichtung besteht aus einem Resonator, einem Hohlraum, einem Resonatorrohr und einem Auskoppelrohr mit Einstelleinrichtung, mit der eine thermo-akustische Schwingung veränderbar ist, und zwar dergestalt, dass Veränderung beispielsweise der Frequenz der thermo-akustischen Schwingungen eine Veränderung der erzeugten Dämpfungsschwingungen im Resonator bewirken. Diese Veränderung ist dergestalt, dass die Anregung des Resonators eine Dämpfungsschwingung erzeugt, die bei Rückkopplung der Dämpfungsschwingung in den Hohlraum mit Hilfe des Resonatorrohrs eine lokale Auslöschung der thermo-akustischen Schwingungen im Überlappungsbereich erzielt. Diese Auslöschung verhindert im Hohlraum die Ausbildung einer stehenden Welle mit der Resonanzfrequenz und dadurch die Schädigung des Hohlraums.

In bevorzugter Ausgestaltung ist die Einstellrichtung ein Phasenschieber. Mit diesem ist die Phase der thermo-akustischen Schwingung einstellbar. Die Einstellung der richtigen Phase bewirkt, dass der Resonator mit der richtigen Phase der thermo-akustischen Schwingungen angeregt ist. Dies ist notwendig um die auf die thermo-akustische Schwingung abgestimmte phasenrichtige Dämpfungsschwingung zu erzeugen.

Bevorzugt weist der Phasenschieber ein Mittel auf, mit der eine Längenänderung der Auskoppelleitung erzielbar ist. Die Längenänderung ist in einfacher Weise durchführbar, beispielsweise durch eine von außen angebrachte mechanische Schiebevorrichtung an der Auskoppelleitung, welche die Länge der Auskoppelleitung in eine dafür vorgesehene Richtung verlängert oder verkürzt. Mit einer solchen Schiebevorrichtung ist der Resonator besonders wartungsfreundlich.

In bevorzugter Ausgestaltung weist der Phasenschieber ein Mittel auf, mit der eine Querschnittsänderung der Auskoppelleitung erzielbar ist. Diese Querschnittsänderung ist wie auch die Längenänderung beispielsweise durch eine von außen angebrachte mechanische Schiebevorrichtung erzielbar. Auch hier ist der Resonator besonders wartungsfreundlich.

Bevorzugt weist der Phasenschieber ein Mittel auf, mit der die Ausbreitungsgeschwindigkeit der thermo-akustischen Schwingungen in der Auskoppelleitung beeinflussbar ist. Durch die Beeinflussung der Ausbreitungsgeschwindigkeit der thermo-akustischen Schwingungen ist die Anregung des Resonators beeinflussbar und zwar dergestalt, dass dieses sich positiv auf die erzeugten Dämpfungsschwingungen im Hinblick auf die Auslöschung der beiden Schwingungen im Überlappungsbereich auswirkt.

In weiterer Ausgestaltung weist der Phasenschieber ein Heizelement auf, mit der eine Temperaturänderung des Mediums in der Auskoppelleitung erzielbar ist. Die Beeinflussung der Temperatur bewirkt eine Veränderung der Frequenz der thermo-akustischen Schwingungen. Damit verändert sich auch die Anregung des Resonators und zwar dergestalt, dass dieses sich positiv auf die erzeugten Dämpfungsschwingungen im Hinblick auf die Auslöschung der beiden Schwingungen im Überlappungsbereich auswirkt. Dies ist beispielsweise durch gezieltes heizen oder abkühlen der Auskoppelleitung bewirkbar. Dazu ist das Auskoppelrohr beispielsweise mit Wasser umgeben, welches von außen sowohl variabel als auch bei Veränderung in dem Hohlraum schnell kühlbar und heizbar ist.

Bevorzugt weist der Phasenschieber ein Mittel auf, mit der eine Druckänderung des Mediums in der Auskoppelleitung erzielbar ist. Die Druckänderung bewirkt eine Dichteänderung in der Auskoppelleitung mit welcher die Frequenz der thermo-akustischen Schwingungen änderbar ist.

Bevorzugt weist der Phasenschieber ein Mittel auf, mit dem ein Behältnis mit einem phasenveränderbaren Medium in der Auskoppelleitung einführbar ist. Hier kann vorteilhafterweise bei Veränderungen des Hohlraums oder der äußeren Einflüsse schnell und effektiv reagiert werden, in dem ein anderes phasenveränderndes Medium, beispielsweise eine andere Flüssigkeit oder ein anderes Gas verwendet wird.

In bevorzugter Ausgestaltung ist der Hohlraum als eine Brennkammer ausgebildet. Hier kann beispielsweise durch Verbrennen eines Brennstoff/Luft-Gemisches ein Heißgasstrom ausgebildet werden, welcher anschließend zur Energieerzeugung verwendet wird.

In bevorzugter Ausgestaltung ist die Vorrichtung in einer Brennkammer vorgesehen, wobei die Brennkammer ein Innengehäuse und ein die Brennkammer teilweise umhüllenden Außengehäuse aufweist, und wobei der Resonator an dem Innengehäuse angebracht ist.

In alternativer Ausgestaltung ist die Vorrichtung in einer Brennkammer vorgesehen, wobei die Brennkammer ein Innengehäuse und ein die Brennkammer teilweise umhüllenden Außengehäuse aufweist, und wobei der Resonator an dem Außengehäuse angebracht ist. Diese Ausgestaltung ist besonders wartungsfreundlich, da der Resonator von außerhalb der Brennkammer zugänglich ist.

Im Folgenden wird die Erfindung beispielhaft anhand einer Zeichnung näher erläutert.

Darin zeigt in vereinfachter und nicht maßstäblicher Darstellung:
- FIG 1: eine schematische Darstellung einer Gasturbine,
- FIG 2: einen Helmholz-Resonator nach dem Stand der Technik,
- FIG 3: eine Vorrichtung und ein Verfahren zur Dämpfung thermo-akustischer Schwingungen gemäß der Erfindung, wobei das Verfahren gemäß der Vorrichtung erläutert ist.

Gleiche Teile sind in allen Figuren mit denselben Bezugszeichen versehen.

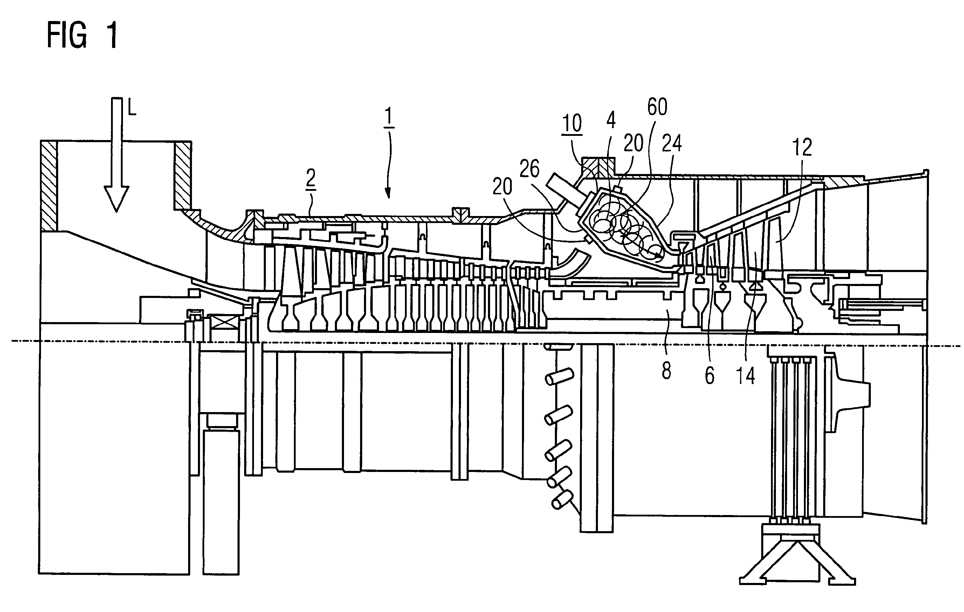

Die Gasturbine 1 gemäß FIG 1 weist einen Verdichter 2 für Verbrennungsluft, eine Brennkammer 4 sowie eine Turbine 6 zum Antrieb des Verdichters 2 und eines nicht näher dargestellten Generators oder einer Arbeitsmaschine auf sowie einen Ringraum 24 zum Überführen des Heißgases M von der Brennkammer 4 zur Turbine 6 auf. Im Verdichter 2 wird zugeführte Luft L verdichtet. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse drehbar gelagert ist. Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14. Die Laufschaufeln 12 dienen zum Antrieb der Turbinenwelle 8 durch Impulsübertrag vom die Turbine 6 durchströmenden heißen Medium, dem Arbeitsmedium, beispielsweise des Heißgases M. Die Leitschaufeln 14 dienen hingegen zur Strömungsführung des Arbeitsmediums beispielsweise des Heißgases M.

In der Brennkammer 4 entstehen durch die Verbrennung eines Gemisches thermo-akustische Schwingungen 60. Um die Ausbildung einer stehenden Welle mit der Resonanzfrequenz zu verhindern, sind an einem die Brennkammer 4 umgebendem Brennkammergehäuse 26 Helmholz-Resonatoren 20 angebracht.

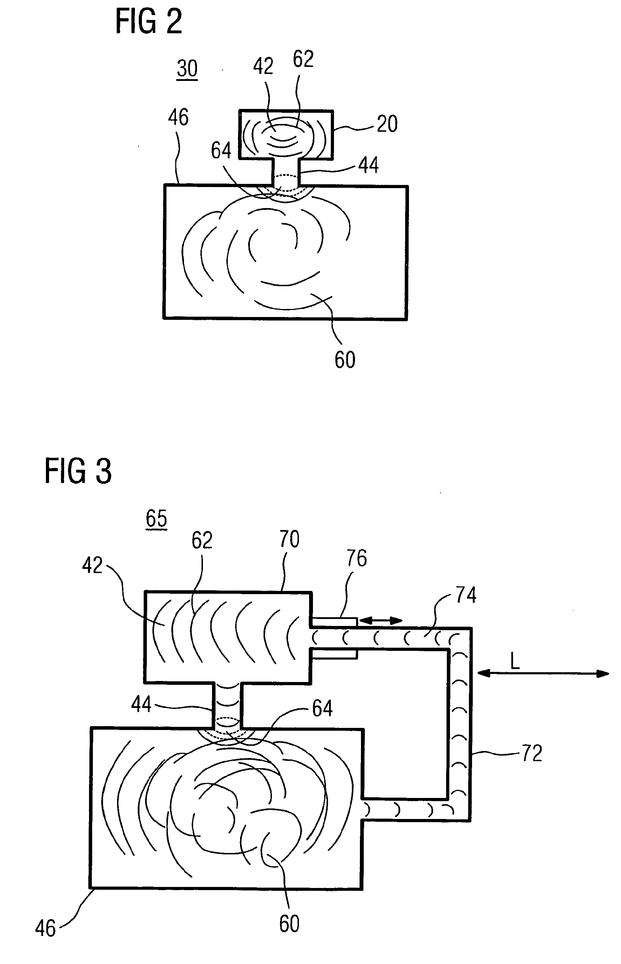

FIG. 2 zeigt eine Vorrichtung 30 mit einem Helmholz-Resonator 20 gemäß des Stands der Technik, die zur Dämpfung thermo-akustischer Schwingungen 60 verwendbar ist. Der Helmholz-Resonator 20 ist mit einem Resonatorrohr 44 an einem Hohlraum 46 verbunden. In dem Hohlraum 46 sind thermo-akustische Schwingungen 60 ausgebildet, wie sie beispielsweise in einer Brennkammer 4 durch Verbrennung erzeugt werden. Der Helmholz-Resonator 20 hat die Aufgabe, die Ausbildung einer stehenden Welle mit Resonanzfrequenz im Hohlraum 46 zu verhindern, indem er die thermo-akustischen Schwingungen 60 im Überlappungsbereich 64 auslöscht. Dies erfolgt mit der Erzeugung von Dämpfungsschwingungen 62 im Resonatorvolumen 42, die durch das Resonatorrohr 44 in den Hohlraum 46 gelangen und sich dort mit den thermo-akustischen Schwingungen 60 überlappen und diese auslöschen. Damit ist der Hohlraum 46 vor Schäden geschützt. Der Helmholz-Resonator 20 weist dabei eine feste Resonanzfrequenz auf, die vorab auf die thermo-akustischen Schwingungen 60 abgestimmt sind. Durch thermische Störungen des Hohlraums 46, beispielsweise einer Brennkammer, verschieben sich jedoch die Frequenzen der thermo-akustischen Schwingung 60. Dies hat zur Folge, dass der Helmholz-Resonator 20 in seiner Wirkweise reduziert ist, d.h. die thermo-akustischen Schwingungen 60 werden im Überlappungsbereich 64 nur noch gering gedämpft oder weisen gar keine Dämpfung mehr auf. Es kann sich daher im Hohlraum 46 eine stehende Welle ausbilden, die den Hohlraum 46 wesentlich schädigen kann.

FIG 3 zeigt eine Vorrichtung 65 und ein Verfahren zur Dämpfung thermo-akustischer Schwingungen 60 gemäß der Erfindung, wobei das Verfahren gemäß der Vorrichtung 65 erläutert ist. Die Vorrichtung 65 weist dabei einen Resonator 70 mit einem Resonatorvolumen 42, ein Resonatorrohr 44, einen Hohlraum 46 sowie ein Resonatorrohr 44, welches Hohlraum 46 und Resonator 70 verbindet als auch eine Auskoppelleitung 72 auf. Die Auskoppelleitung 72 stellt ebenfalls eine Verbindung des Resonators 70 mit dem Hohlraum 46 dar. Weiterhin besitzt die Auskoppelleitung 72 eine Einstelleinrichtung 76. In dem Hohlraum 46, beispielsweise einer Brennkammer sind thermo-akustische Schwingungen 60 ausgebildet. Durch die Auskoppelleitung 72 wird ein Teil 74 der thermo-akustischen Schwingungen ausgekoppelt. Über die Auskoppelleitung 72 wird dieser in den Resonator 70 eingespeist und der Resonator 70 damit angeregt.

Die an der Auskoppelleitung 72 angebrachte Einstellvorrichtung 76 bewirkt eine Änderung des ausgekoppelten Teils 74 der thermo-akustischen Schwingungen in der Auskoppelleitung 72. Die Einstellvorrichtung 76 ist beispielsweise eine Schiebevorrichtung in eine Richtung L welche eine Längenänderung der Auskoppelleitung 72 zur Folge hat. Durch diesen kontrollierten Zeitverzug regt der ausgekoppelte Teil 74 der thermo-akustischen Schwingungen den Resonator 70 derart an, dass sich Dämpfungsschwingungen 62 ausbilden, welche, durch das Resonatorrohr 44 in den Hohlraum 46 übertragen, im Überlappungsbereich 64 eine Auslöschung der beiden Schwingungen bewirken. Ändern sich die Frequenz der thermo-akustischen Schwingungen 60 im Hohlraum 46 aufgrund äußerer Einflüsse, so ist eine Veränderung der Frequenz der Dämpfungsschwingung 62 notwendig, um eine Auslöschung im Überlappungsbereich 64 zu erzielen. Diese erfolgt teilweise bereits durch die Veränderung der thermo-akustischen Schwingungen 60 und die damit induzierte veränderte Anregung des Resonators 70 durch den ausgekoppelten Teil der Schwingungen 74. Eine weitere Anpassung der Dämpfungsschwingung 62 auf die thermo-akustische Schwingung 60 im Hohlraum 46 ist durch verschiedene Einstellungen des Einstellelements 76 erzielbar. Die einfache Ausgestaltung des Einstellelements 76 als beispielsweise Schiebeelement zur Längenänderung ist vorteilhaft insbesondere bei der Wartungs- und -servicefreundlichkeit und ist zudem kostengünstig.

Dadurch ist eine weitgehende Auslöschung der beiden Schwingungen im Überlappungsbereich 64 sichergestellt. Das Entstehen einer stehenden Welle mit Resonanzfrequenz im Hohlraum 46 wird somit vermieden. Eine Schädigung des Hohlraums 46 wird verhindert.

Das nachträgliche Abstimmen der Resonanzfrequenz des Resonators 70 erlaubt eine besonders vielfältige und sichere Einsatzmöglichkeit des Hohlraums 46, z.B. als Brennkammer bei Prototypenerprobung.

## Patentansprüche

1. Verfahren zur Dämpfung thermo-akustischer Schwingungen (60) mittels eines Resonators (70), der ein Resonatorvolumen (42) aufweist,
**dadurch gekennzeichnet, dass**
a) in einem zu thermo-akustischen Schwingungen neigenden Hohlraum (46) thermo-akustische Schwingungen (60) induziert werden,
b) zumindest ein Teil der thermo-akustischen Schwingungen (74) aus dem Hohlraum (46) ausgekoppelt und in das Resonatorvolumen (42) eingekoppelt werden,
c) in dem Resonatorvolumen (42) Dämpfungsschwingungen (62) erzeugt werden, die auf die thermo-akustischen Schwingungen (60) abgestimmt werden, wobei
d) zumindest ein Teil der Dämpfungsschwingungen (62) in den Hohlraum (46) derart eingekoppelt wird, dass sich die Dämpfungsschwingungen (62) und die thermo-akustischen Schwingungen (60) in einem Überlappungsbereich (64) überlappen, und wobei
e) sich die Schwingungen zumindest im Überlappungsbereich (64) weitgehend auslöschen.

2. Verfahren nach Anspruch 1,
**dadurch gekennzeichnet, dass** die Dämpfungsschwingungen (62) bezüglich der thermo-akustischen Schwingungen (60) gegenphasig abgestimmt werden.

3. Verfahren nach Anspruch 2,
**dadurch gekennzeichnet, dass** die Dämpfungsschwingungen (62) bezüglich der Frequenz, Phase und Wellenlänge eingestellt werden.

4. Verfahren nach einem der vorhergehenden Ansprüche,
**dadurch gekennzeichnet, dass** die Phase der Dämpfungsschwingungen (62) im Überlappungsbereich (64) über eine Beeinflussung der Laufzeit der aus dem Hohlraum (46) ausgekoppelten thermo-akustischen Schwingungen (74) eingestellt wird.

5. Verfahren nach einem der vorhergehenden Ansprüche,
**dadurch gekennzeichnet, dass** zur Erreichung einer zeitlich kontinuierlichen Auslöschung im Überlappungsbereich (64) die Dämpfungsschwingungen (62) in situ den thermo-akustischen Schwingungen (60) angepasst werden.

6. Verfahren nach einem der vorhergehenden Ansprüche,
**dadurch gekennzeichnet, dass** die Dämpfungsschwingungen (62) über einen Frequenzbereich zwischen 10Hz und 400 Hz eingestellt werden.

7. Verfahren nach einem der vorhergehenden Ansprüche,
**dadurch gekennzeichnet, dass** die thermo-akustischen Schwingungen (60) in dem Hohlraum (46) durch Verbrennungsschwingungen induziert werden.

8. Verfahren nach Anspruch 7,
**dadurch gekennzeichnet, dass** das Verfahren zur Dämpfung von thermo-akustischen Verbrennungsschwingungen (60) in einer Brennkammer (4) angewendet wird.

9. Verfahren nach Anspruch 8,
**dadurch gekennzeichnet, dass** das Verfahren bei einer Brennkammer (4) einer Gasturbine (1) angewendet wird.

10. Vorrichtung (65) zur Dämpfung thermo-akustischer Schwingungen (60) in einem schwingungsfähigen Hohlraum (46), umfassend einen Resonator (70) mit einem Resonatorvolumen (42) und einen Hohlraum (46), **dadurch gekennzeichnet, dass** der Hohlraum (46) über eine Auskoppelleitung (72) mit dem Resonatorvolumen (42) verbunden ist, bei der die Auskoppelleitung (72) eine Einstelleinrichtung (76) aufweist, mittels derer eine thermo-akustische Schwingung (60) in der Auskoppelleitung (72) beeinflussbar ist, und bei der ein weiteres Resonatorrohr (44) vom Resonator (70) zum Hohlraum (46) angeschlossen ist.

11. Vorrichtung nach Anspruch 10,
**dadurch gekennzeichnet, dass** die Einstelleinrichtung (76) ein Phasenschieber ist, mit der die Phase der thermo-akustischen Schwingung (60) einstellbar ist.

12. Vorrichtung nach Anspruch 11,
**dadurch gekennzeichnet, dass** der Phasenschieber Mittel aufweist, mit der eine Längenänderung der Auskoppelleitung (72) erzielbar ist.

13. Vorrichtung nach Anspruch 11,
**dadurch gekennzeichnet, dass** der Phasenschieber Mittel aufweist, mit der eine Querschnittsänderung der Auskoppelleitung (72) erzielbar ist.

14. Vorrichtung nach Anspruch 11,
**dadurch gekennzeichnet, dass** der Phasenschieber ein Mittel aufweist, mit der die Ausbreitungsgeschwindigkeit des ausgekoppelten Teils der thermo-akustischen Schwingungen (74) in der Auskoppelleitung (72) beeinflussbar ist.

15. Vorrichtung nach Anspruch 11,
**dadurch gekennzeichnet, dass** der Phasenschieber ein Heizelement aufweist, mit der eine Temperaturänderung eines Übertragungsmediums der thermo-akustischen Schwingungen (74) in der Auskoppelleitung (72) erzielbar ist.

16. Vorrichtung nach Anspruch 11,
**dadurch gekennzeichnet, dass** der Phasenschieber ein Mittel aufweist, mit der eine Druckänderung eines Übertragungsmediums der thermo-akustischen Schwingungen (74) in der Auskoppelleitung (72) erzielbar ist.

17. Vorrichtung nach Anspruch 11,
**dadurch gekennzeichnet, dass** der Phasenschieber ein Mittel aufweist, mit dem ein Behältnis mit einem phasenveränderbaren Medium in der Auskoppelleitung (72) einführbar ist.

18. Vorrichtung nach einem der vorhergehenden Ansprüche 10-17,
**dadurch gekennzeichnet, dass** der Hohlraum (46) durch eine Brennkammer (4) gebildet ist.

19. Brennkammer (4) mit einer Vorrichtung (65) nach einem der vorhergehenden Ansprüche 10-18, wobei die Brennkammer (4) ein Innengehäuse und ein die Brennkammer (4) teilweise umhüllenden Außengehäuse aufweist,
**dadurch gekennzeichnet, dass** der Resonator (70) an dem Innengehäuse angebracht ist.

20. Brennkammer (4) mit einer Vorrichtung (65) nach einem der vorhergehenden Ansprüche 10 -18, wobei die Brennkammer (4) ein Innengehäuse und ein die Brennkammer (4) teilweise umhüllenden Außengehäuse aufweist,
**dadurch gekennzeichnet, dass** der Resonator (70) an dem Außengehäuse angebracht ist.

21. Gasturbine (1) mit einer Brennkammer (4) nach einem der Ansprüche 19 oder 20.
